(19) Europäisches Patentamt
European Patent Office
Office européen des brevets

(11) EP 2 152 791 B1

(12) EUROPÄISCHE PATENTSCHRIFT

(45) Veröffentlichungstag und Bekanntmachung des Hinweises auf die Patenterteilung:
**22.06.2011 Patentblatt 2011/25**

(21) Anmeldenummer: **08749590.9**

(22) Anmeldetag: **17.04.2008**

(51) Int Cl.:
***C08K 3/36*** *(2006.01)* ***C08K 9/00*** *(2006.01)*
***C08K 5/54*** *(2006.01)* ***C08L 21/00*** *(2006.01)*

(86) Internationale Anmeldenummer:
**PCT/EP2008/054663**

(87) Internationale Veröffentlichungsnummer:
**WO 2008/132061 (06.11.2008 Gazette 2008/45)**

(54) **VERFAHREN ZUR HERSTELLUNG VON KAUTSCHUKMISCHUNGEN**

METHODS FOR PRODUCING RUBBER MIXTURES

PROCÉDÉS DE PRÉPARATION DE MÉLANGES DE CAOUTCHOUC

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **27.04.2007 DE 102007020451**

(43) Veröffentlichungstag der Anmeldung:
**17.02.2010 Patentblatt 2010/07**

(73) Patentinhaber: **LANXESS Deutschland GmbH**
**51369 Leverkusen (DE)**

(72) Erfinder: **OBRECHT, Werner**
**47447 Moers (DE)**

(56) Entgegenhaltungen:
**EP-A- 1 078 953**
**EP-A- 1 083 200**
**EP-A- 1 245 630**
**EP-A- 1 520 732**
**US-A1- 2003 092 827**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Verfahren zur Herstellung von mikrogel-haltigen Kautschukmischungen, Kautschukmischungen, erhältlich nach diesem Verfahren, Verfahren zur Herstellung von Vulkanisaten sowie Vulkanisate nach dem Vulkanisationsverfahren, insbesondere in der Form von Reifen, Teilen von Reifen oder technischen Gummiartikeln. Durch die erfindungsgemäßen Verfahren werden die physikalischen und mechanischen Eigenschaften unvulkanisierter und vulkanisierter Kautschukmischungen, die Kieselsäure und Mikrogele, insbesondere Mikrogelen auf Basis Kautschuken enthalten, dadurch verbessert, dass die Umsetzung mit schwefelhaltigen siliciumorganischen Verbindungen sequentiell, d.h. in mehreren separaten Stufen, durchgeführt wird.

Für die Herstellung von Reifenlaufflächen mit einer guten Eigenschaftskombination von Rollwiderstand, Nassrutschfestigkeit und Abrieb, wie sie für PKW-Reifenlaufflächen gefordert wird, ist die Verwendung kieselsäurehaltiger Kautschukmischungen bekannt. Für die Erzielung der gewünschten Eigenschaftskombination ist es wichtig, die Kieselsäure gut zu dispergieren und bei der Vulkanisation an die Kautschukmatrix anzukoppeln. Hierfür werden bei der Mischungsherstellung schwefelhaltige organische Silane eingesetzt (z.B.: DE -A-24 47 614; US-A-4,709,065; EP-A-0 501 227; EP-A-99 074; DE-A-3 813 678 sowie EP-A-447 066).

In diesen Patenten wird bei der Mischungsherstellung Kieselsäure in Kombination mit schwefelhaltigen organischen Silanen verwendet. Die Silane werden im gleichen Mischschritt wie die Kieselsäure in die Mischung gegeben, um die Kieselsäure zu hydrophobieren und um eine gute Dispersion in der Mischung zu erzielen. Zusätzlich wird mit den schwefelhaltigen Organosilanen bei der Vulkanisation eine gute Ankopplung der Kieselsäure an die Kautschukmatrix erreicht.

In diesen Patenten findet sich weder eine Lehre zur Kombination von Kieselsäure mit Mikrogelen noch zur sequentiellen Silanzugabe.

Auch die Verwendung von Mikrogelen in Kautschukcompounds ist bekannt und wird beispielsweise in folgenden Patenten bzw. Anmeldungen beschrieben: EP-A-405 216, EP-A-0 575 851, DE-A-197 01 489, EP-A-1 149 866, EP-A-1 149 867, EP-A-1 152 030, EP-A-1 298 166, EP-A-1 245 630 und EP-A-1 291 369.

Die EP-A-405 216 lehrt die Herstellung und Anwendung von Gelen auf Polychloroprenbasis. Die EP-A-0 575 851 lehrt die Herstellung und Anwendung von Gelen auf Polybutadienbasis und die EP-A-0 854 171 lehrt die Herstellung von Gelen mit vulkanisationsaktiven Gruppen. Nach der Lehre dieser Patente ist die Anwendung von Gelen vorteilhaft für die Erzielung einer guten Nassrutschfestigkeits-/Rollwiderstandrelation. Ein Indiz für diese Eigenschaftskombination ist die Differenz der Rückprallelastizitäten bei 70°C und 23°C ($\Delta(R_{70}-R_{23})$). Allerdings sind die mechanischen Eigenschaften der mit diesen Gelen hergestellten Vulkanisate nicht zufriedenstellend.

Eine Verbesserung der mechanischen Eigenschaften mikrogelhaltiger Kautschukcompounds gelingt durch die Anwendung von Silanen (EP-A-1 063 259/US-A-6,399,706). Die Compounds basieren auf NR und enthalten nur Gel und keine weiteren Füllstoffe. Die Compoundherstellung erfolgt in einem zweistufigen Verfahren. Nach der Lehre dieses Patents werden bei Geldosierungen von 75 phr (ohne Silica) sehr hohe Differenzen der Rückprallelastizitäten zwischen 70°C und 23°C gefunden (Maximalwerte von 43% und 45 % in 3. Mischungsserie). Allerdings sind die mechanischen Eigenschaften der Vulkanisate insbesondere das Produkt ($\sigma_{300}$ x $\varepsilon_0$) aus Spannungswert bei 300% Dehnung ($\sigma_{300}$) und Bruchdehnung ($\varepsilon_b$) nicht ausreichend.

Durch die Kombination von Silica, Mikrogel und Ruß in kautschukhaltigen Compounds (EP-A-1 401 951/US-A-2003/092827) gelingen weitere Verbesserungen insbesondere in den mechanischen Eigenschaften der Vulkanisate ausgedrückt als Produkt $\sigma_{300}$ x $\varepsilon_b$. Die besten Werte werden beim Zusatz von 1 phr des Mikrogels gefunden ($\sigma_{300}$ x $\varepsilon_b$ = 5106). Bei einer weiteren Erhöhung des Mikrogelanteils wird das Produkt aus $\sigma_{300}$ x $\varepsilon_b$ verschlechtert. In Gegenwart von Silica betragen die höchsten Werte für die Differenzen der Rückprallelastizitäten $\Delta(R_{70}-R_{23})$ = 30 % (Mischungsserie A) sowie 36 % (Mischungsserie B). Die höchste Differenz der Rückprallelastizitäten $\Delta(R_{70}-R_{23})$ = 38 % wird bei dem silicafreien Compound Nr. 8 in der Mischungsserie B gefunden.

Nach den Lehren von EP-A-1 149 866, EP-A-1 149 867, EP-A-1 152 030, EP-A-1 298 166, EP-A-1 245 630, EP-A-1 291 369 werden Kautschukcompounds, die Kieselsäure in Kombination mit Gel enthalten, hergestellt. In diesen Patenten findet sich keine Lehre zur sequentiellen Silanzugabe. Des weiteren fehlen in den genannten Patenten Angaben zum Modul 300 ($\sigma_{300}$). Auf diese Weise ist keine Vergleichbarkeit der mechanischen Eigenschaften der nach der Lehre dieser Patente hergestellten Vulkanisate mit anderen aus der Patentliteratur etc. zugänglichen Daten auf der Basis des Produkts ($\sigma_{300}$ x $\varepsilon_b$) möglich.

Für eine weitere Verbesserung der Eigenschaften von Kautschukcompounds, die Kieselsäure und Kautschukgele enthalten, sind weitere Verbesserungen der Vulkanisateigenschaften, insbesondere des Produkts aus Spannungswert bei 300% Dehnung und Bruchdehnung ($\sigma_{300}$ x $\varepsilon_b$) notwendig, ohne dass die Differenzen der Rückprallelastizitäten $\Delta(R_{70}-R_{23})$ beeinträchtigt werden.

Es wurde jetzt gefunden, dass dieses Ziel mit Kautschukcompounds, insbesondere auf Basis von SBR und BR, die als Füllstoffe mindestens einen hydroxyl-haltigen oxidischen Füllstoff, wie insbesondere Kieselsäure und Kautschukgel enthalten, erreicht werden kann, wenn die Mischungsherstellung mehrstufig durchgeführt wird, wobei die

Zugabe des schwefelhaltigen organischen Silans auf mindestens zwei Mischstufen aufgeteilt wird.

Gegenstand der Erfindung ist daher ein Verfahren zur Herstellung von Kautschukmischungen, welches das Mischen folgender Komponenten umfasst:

a) eine oder mehrere Kautschukkomponenten,
b) ein oder mehrere hydroxylgruppen-haltiger oxidische Füllstoffe,
c) ein oder mehrere hydroxylgruppen-haltiger Mikrogele,
d) ein oder mehrere schwefelhaltige siliciumorganische Verbindungen,
e) gegebenenfalls ein oder mehrere Vulkanisationsmittel,
f) gegebenenfalls ein oder mehrere Kautschukadditive,

dadurch gekennzeichnet, dass die schwefelhaltigen siliciumorganische Verbindung in mindestens zwei separaten Portionen zugesetzt wird, wobei die erste Portion mindestens 30 Gew.-% der Gesamtmenge der schwefelhaltigen siliciumorganischen Verbindung umfasst.

**Kautschukkomponente a)**

Die erfindungsgemäßen Kautschukkomponenten a) schließen bevorzugt solche auf Basis von Dienen ein, wie insbesondere doppelbindungshaltige Kautschuke, die praktisch keinen Gelanteil enthalten und die nach DIN/ISO 1629 als R-Kautschuke bezeichnet werden. Diese Kautschuke haben Doppelbindungen in der Hauptkette. Bevorzugt verwendete Kautschukkomponenten sind beispielsweise solche auf Basis von

| | |
|---|---|
| NR: | Naturkautschuk |
| SBR: | Styro/Butadienkautschuk |
| BR: | Polybutadienkautschuk |
| IR: | Polyisopren |
| SIBR: | Styrol/Isopren-Kautschuk |
| NBR: | Nitrilkautschuk |
| IIR: | Butylkautschuk (Isobuten/Isopren-Kautschuk) |
| HNBR: | Hydrierter Nitrilkautschuk |
| SNBR: | Styrol/Butadien/Acrylnitril-Kautschuk |
| CR: | Polychloropren |
| XSBR: | carboxylierte Styrol/Butadien-Kautschuk |
| XNBR: | Carboxylierter Butadien/Acrylnitril-Kautschuk |
| ENR: | Epoxydierter Naturkautschuk |
| ESBR: | Epoxydierter Styrol/Butadien-Kautschuk |

und Mischungen davon.

Doppelbindungshaltige Kautschukkomponenten schließen erfindungsgemäß auch solche ein, die nach DIN/ISO 1629 M-Kautschuke sind und neben der gesättigten Hauptkette Doppelbindungen in Seitenketten aufweisen. Hierzu gehört z.B. EPDM.

Bevorzugte Kautschukkomponenten sind erfindungsgemäß: NR, BR, IR, SBR, IIR und EPDM.

Besonders bevorzugt sind Naturkautschuk (NR) und synthetisch hergestelltes Polyisopren (IR) sowie Styrol/Diolefin-, insbesondere Styrol/Dien-, insbesondere Styrol/Butadien-Kautschuke sowie Mischungen dieser Kautschuke.

Unter Styrol/Diolefin (insbesondere Butadien)-Kautschuken werden sowohl Lösungs-SBR-Kautschuke abgekürzt: L-SBR als auch Emulsions-SBR-Kautschuke, abgekürzt: E-SBR verstanden. Unter L-SBR versteht man kautschukartige Polymere, die in einem Lösungsprozess auf der Basis von Vinylaromaten und konjugierten Dienen hergestellt werden (H. L. Hsieh, R. P. Quirk, Marcel Dekker Inc. New York-Basel 1996; I. Franta Elastomers and Rubber Compounding Materials; Elsevier 1989, Seite 73-74, 92-94; Houben-Weyl, Methoden der Organischen Chemie, Thieme Verlag, Stuttgart, 1987, Band E 20, Seiten 114 bis 134; Ullmann's Encyclopedia of Industrial Chemistry, Vol A 23, Rubber 3. Synthetic, VCH Verlagsgesellschaft mbH, D-69451 Weinheim, 1993, S. 239-364 sowie (FR 2 295 972)). Geeignete vinylaromatische Monomere sind Styrol, o-, m- und p- Methylstyrol, technische Methylstyrolgemische, p-tert.-Butylstyrol, $\alpha$-Methylstyrol, p-Methoxystyrol, Vinylnaphthalin, Divinylbenzol, Trivinylbenzol und Divinylnaphthalin. Bevorzugt ist Styrol. Der Gehalt an einpolymerisiertem Vinylaromat liegt bevorzugt zwischen 5 bis 50 Gew.-%, bevorzugter zwischen 10 bis 40 Gew.-%. Geeignete Diolefine sind 1,3-Butadien, Isopren, 1,3-Pentadien, 2,3-Dimethylbutadien, 1-Phenyl-1,3-butadien und 1,3-Hexadien. Bevorzugt sind 1,3-Butadien und Isopren. Der Gehalt an einpolymerisierten Dienen liegt zwischen 50 bis 95 Gew. %, bevorzugt zwischen 60 bis 90 Gew. %. Der Gehalt an Vinylgruppen im einpolymerisierten Dien liegt zwischen 10 und 90 %, der Gehalt an 1,4-trans-ständigen Doppelbindungen beträgt zwischen 20 und 80 %

und der Gehalt an 1,4-cis ständigen Doppelbindungen ist komplementär zur Summe aus Vinylgruppen und 1,4-transständigen Doppelbindungen. Der Vinylgehalt des L-SBR beträgt vorzugsweise > 20 %.

Üblicherweise sind die polymerisierten Monomeren und die unterschiedlichen Dien-Konfigurationen statistisch im Polymeren verteilt. Auch Kautschuke mit blockartig aufgebauter Struktur, die als Integralkautschuk bezeichnet werden, sollen unter die Definition von L-SBR (A) fallen (K.-H. Nordsiek, K.-H. Kiepert, GAK-Kautschuk Gummi Kunststoffe 33 (1980), no. 4,251-255).

Unter L-SBR sollen sowohl lineare als auch verzweigte oder endgruppenmodifizierte Kautschuke verstanden werden. Beispielsweise sind hier genannt: FR 2 053 786 und JP-A-56-104 906. Als Verzweigungsmittel wird bevorzugt Siliciumtetrachlorid bzw. Zinntetrachlorid eingesetzt.

Die Herstellung der Kautschukkomponente a) für die erfindungsgemäßen Kautschukmischungen erfolgt insbesondere durch anionische Lösungspolymerisation, d. h. mittels eines Katalysators auf Alkali- oder Erdalkalimetallbasis in einem organischen Lösungsmittel.

Die in Lösung polymerisierten Vinylaromat/Diolefin-Kautschuke besitzen vorteilhaft Mooneywerte zwischen 20 und 150 Mooneyeinheiten, vorzugsweise 30 bis 100 Mooneyeinheiten. Insbesondere die hochmolekularen E-SBR-Typen mit Mooneywerten > 80 ME können Öle in Mengen von 30 bis 100 Gew.-Teile bezogen auf 100 Gew.-Teile Kautschuk enthalten. Die ölfreien L-SBR-Kautschuke weisen Glastemperaturen von -80° bis +20° C auf, bestimmt durch Differentialthermoanalyse (DSC).

Unter E-SBR versteht man kautschukartige Polymere, die in einem Emulsionsprozess auf der Basis von Vinylaromaten, konjugierten Dienen und gegebenenfalls weiteren Monomeren hergestellt werden Ullmann's Encyclopedia of Industrial Chemistry, Vol A 23, Rubber 3. Synthetic, VCH Verlagsgesellschaft mbH, D-69451 Weinheim, 1993, S. 247-251). Vinylaromaten sind Styrol, p-Methylstyrol und alpha-Methylstyrol. Diene sind insbesondere Butadien und Isopren. Weitere Monomere sind insbesondere Acrylnitril. Die Gehalte an Vinylaromaten liegen zwischen 10 und 60 Gew. %. Die Glastemperatur liegt zwischen -50 und +20°C (bestimmt mittels DSC) und die Mooneywerte zwischen 20 und 150 Mooneyeinheiten. Insbesondere die hochmolekularen E-SBR-Typen mit Mooneywerten > 80 ME können Öle in Mengen von 30 bis 100 Gew.-Teile bezogen auf 100 Gew.-Teile Kautschuk enthalten. Die ölfreien L-SBR-Kautschuke weisen Glastemperaturen von -80° bis +20° C auf, bestimmt durch Differentialthermoanalyse (DSC).

Polybutadien (BR) umfasst insbesondere zwei unterschiedliche Polybutadien-Typklassen. Die erste Klasse weist einen 1,4-cis-Gehalt von mindestens 90 % auf und wird mit Hilfe von Ziegler/Natta-Katalysatoren auf der Basis von Übergangsmetallen hergestellt. Vorzugsweise werden Katalysatorsysteme auf der Basis von Ti-, Ni-, Co- und Nd-eingesetzt (Houben-Weyl, Methoden der Organischen Chemie, Thieme Verlag, Stuttgart, 1987, Band E 20, Seiten 114 bis 134; Ullmann's Encyclopedia of Industrial Chemistry, Vol A 23, Rubber 3. Synthetic, VCH Verlagsgesellschaft mbH, D-69451 Weinheim, 1993, S. 239-364). Die Glastemperatur dieses Polybutadiens liegt bevorzugt bei ≤ -90°C (bestimmt mittels DSC).

Die zweite Polybutadientypklasse wird mit Li-Katalysatoren hergestellt und weist Vinylgehalte von 10% bis 80% auf. Die Glastemperaturen dieser Polybutadienkautschuke liegen im Bereich von -90 bis +20 °C (bestimmt mittels DSC).

Polyisopren (IR) hat einen 1,4-eis-Gehalt von mindestens 70%. Verwendung findet sowohl synthetisch hergestelltes 1,4-cis-Polyisopren (IR) als auch Naturkautschuk (NR). Synthetisch wird IR sowohl mittels Lithium- als auch mit Hilfe von Ziegler/Natta-Katalysatoren hergestellt (Houben-Weyl, Methoden der Organischen Chemie, Thieme Verlag, Stuttgart, 1987, Band E 20, Seiten 114 bis 134; Ullmann's Encyclopedia of Industrial Chemistry, Vol. A 23, Rubber 3. Synthetic, VCH Verlagsgesellschaft mbH, D-69451 Weinheim, 1993, S. 239-364). Vorzugsweise wird Naturkautschuk eingesetzt.

Auch Polyisopren, das als 3,4-Polyisopren bekannt ist und Glastemperaturen im Bereich von -20 bis -30 °C aufweist, fällt unter IR.

Erfindungsgemäß bevorzugt wird die Kautschukkomponente ausgewählt aus der Gruppe, die besteht aus: Styrol/Butadien-Kautschuken, Polybutadien und Polyisopren, wobei diese Kautschuke auch mit Mineralölen verstreckt sein können.

Das Verhältnis der übrigen Komponenten zu den Kautschukkomponenten a) wird üblicherweise in der relativen Mengenangabe phr (parts per hundred parts rubber (also Komponente a)) angegeben. Üblicherweise werden auf 100 Gew.-Teile der Kautschukkomponenten a), 5 bis 100 Gew.-Teilc des hydroxylgruppen-haltigen oxidischen Füllstoffs b) (entsprechend 5 bis 100 phr), 1 bis 30 phr, vorzugsweise 5 bis 25 phr der Mikrogele c), 0,1 phr bis 15 phr, vorzugsweise 0,2 phr bis 10 phr der schwefelhaltigen siliciumorganischen Verbindung d), vorzugsweise Bis-(triethoxisilylpropyl)-tetrasulfid oder Bis(triethoxysilylpropyl)disulfid, 0,1 bis 15 phr, bevorzugt 0,1-10 phr der Vulkanisationmittel e) sowie 0,1 bis 200 phr der Kautschukadditive f) verwendet. Bevorzugt enthalten die erfindungsgemäßen Mischungen des weiteren Ruß in Mengen von 1 bis 100 phr.

**Hydroxylgruppen-haltiger oxidischer Füllstoff b)**

Als hydroxylgruppen-haltiger oxidischer Füllstoff b) wird vorzugsweise ein siliziumhaltiger oxidischer hydroxylgruppen-haltiger Füllstoff, wie insbesondere Kieselsäure eingesetzt. Derartige insbesondere hydrophile Kieselsäuren tragen insbesondere an der Oberfläche Hydroxylgruppen.

Kieselsäure oder "Silica" (Ullmann's Encyclopedia of Industrial Chemistry, VCH Verlagsgesellschaft mbH, D-69451 Weinheim, 1993, "Silica", S.635-645), wird insbesondere als pyrogene Kieselsäure (ibid. S. 635-642) oder als gefällte Kieselsäure (ibid. 642-645) eingesetzt, wobei erfindungsgemäß die gefällte Kieselsäure bevorzugt wird. Die gefällten Kieselsäuren haben eine spezifische Oberfläche von 5 bis 1000 $m^2/g$ bestimmt nach BET vorzugsweise eine spezifische Oberfläche von 20 bis 400 $m^2/g$. Sie werden durch Behandlung von Wasserglas mit anorganischen Säuren erhalten, wobei vorzugsweise Schwefelsäure eingesetzt wird. Die Kieselsäuren können gegebenenfalls auch als Mischoxide mit anderen Metalloxiden, wie Al-, Mg-, Ca-, Ba-, Zn-, Zr- Ti-Oxiden vorliegen.

Bevorzugt werden erfindungsgemäß Kieselsäuren mit spezifischen Oberflächen von 5 bis 1000 $m^3/g$, bevorzugter 20 bis 400 $m^2/g$, jeweils bestimmt nach BET, eingesetzt.

Der erfindungsgemäß verwendete hydroxylgruppen-haltige oxidische Füllstoff b) wird bevorzugt in Mengen von 20 bis 150 phr, vorzugsweise 30 bis 120 phr bezogen auf 100 phr (parts per 100 parts rubber) eingesetzt, wobei der hydroxylgruppen-haltige oxidische Füllstoff b) mindestens 30 %, vorzugsweise mindestens 50 % des Füllstoffanteils bezogen auf die Gesamtmenge der eingesetzten Füllstoffe ausmacht.

**Mikrogele c)**

Die in der erfindungsgemäßen vulkanisierbaren Zusammensetzung einsetzbaren Mikrogele besitzen Glastemperaturen im Bereich von -75 °C bis + 120°C (bestimmt mittels DSC).

Das in der erfindungsgemäßen vulkanisierbaren Zusammensetzung verwendete Mikrogel ist üblicherweise ein vernetztes Mikrogel auf der Basis von Homopolymeren oder Copolymeren. Bei den erfingdungsgemäß verwendeten Mikrogelen handelt es sich somit um üblicherweise um vernetzte Homopolymere oder vernetzte Copolymere. Die Begriffe Homopolymere und Copolymere sind dem Fachmann hinlänglich bekannt und beispielsweise bei Vollmert, Polymer Chemistry, Springer 1973 erläutert.

Die Glastemperaturen der Mikrogele liegen in der Regel um 1°C bis 10°C höher als die Glastemperaturen der entsprechenden unvernetzten Homo- oder Copolymeren, wobei die Glastemperaturen der Mikrogele in erster Näherung proportional mit dem Vernetzungsgrad ansteigen. Bei schwach vernetzen Mikrogelen liegen die Glastemperaturen nur ca. 1°C höher als bei den entsprechenden Homo- oder Copolymeren. Bei hochvernetzten Mikrogelen können die Glastemperaturen bis zu 10°C höher liegen als die Glastemperaturen der entsprechenden unvernetzten Homo- oder Copolymeren. Die Glastemperaturen der zugrunde liegenden unvernetzten Copolymere können insbesondere auch mit Hilfe der folgenden Gleichungen berechnet werden (siehe z.B.: U. Eisele, Einführung in die Polymerphysik, Springer-Verlag):

$$Tg_{Copolymer} = w_1{}^*Tg_1 + w_2{}^*\, Tg_2 + w_3{}^*Tg_3 + \ldots$$

| | |
|---|---|
| $Tg_{Copolymer}$: | Glastemperatur des Copolymers in °C |
| $W_1$: | Gewichtsanteil des Homopolymers 1 |
| $T_{g1}$: | Glastemperatur des Homopolymers 1 in °C |
| $W_2$: | Gewichtsanteil des Homopolymers 2 |
| $T_{g2}$: | Glastemperatur des Homopolymers 2 in °C |
| $W_3$: | Gewichtsanteil des Homopolymers 3 |
| $T_{g3}$: | Glastemperatur des Homopolymers 3 in °C |

$$\frac{1}{Tg_{Copolymer}} = \frac{w_1}{Tg_1} + \frac{w_2}{Tg_2} + \frac{w_3}{Tg_3} + \ldots$$

Tg copolymer: Glastemperatur des Copolymers in K

| | |
|---|---|
| $W_1$: | Gewichtsanteil des Homopolymers 1 |
| Tg,: | Glastemperatur des Homopolymers 1 in K |
| $W_2$: | Gewichtsanteil des Homopolymers 2 |
| $T_{g2}$: | Glastemperatur des Homopolymers 2 in K |
| $W_{3:}$ | Gewichtsanteil des Homopolymers 3 |
| $T_{g3}$: | Glastemperatur des Homopolymers 3 in K |

Gute Ergebnisse werden bei diesen Berechnungen erzielt, wenn man von folgenden Glastemperaturen der entsprechenden Homopolymeren ausgeht: Polybutadien: -80°C, Polyisopren: -65°C, Polychloropren: -39°C, Polystyrol: + 100°C, Polyacrylnitril: + 100°C, Poly-alpha-Methylstyrol: + 115°C, Poly(2-hydroxyethyl-methacrylat): + 75°C und Poly (2-hydroxypropyl-methacrylat): + 80°C. Weitere Glastemperaturen sind publiziert in J. Brandrup, E. H. Immergut, Polymer Handbook, Wiley & Sons 1975.

Die in der erfindungsgemäßen vulkanisierbaren Zusammensetzung eingesetzten Mikrogele weisen zweckmäßigerweise in Toluol bei 23°C unlösliche Anteile ("Gelgehalt") von mindestens 70 Gew.-%, bevorzugt mindestens 80 Gew.-%, und besonders bevorzugt mindestens 90 Gew.-% auf. Dieser in Toluol unlösliche Anteil wird in Toluol bei einer Temperatur von 23° bestimmt. Hierbei werden 250 mg des Mikrogels in 25 ml Toluol 24 Stunden unter Schütteln bei 23°C gequollen. Nach Zentrifugation mit 20.000 Upm wird der unlösliche Anteil abgetrennt und getrocknet. Der Gelgehalt ergibt sich aus dem Quotienten des getrockneten Rückstandes und der Einwaage und wird in Gewichtsprozent angegeben.

Die in der erfindungsgemäßen vulkanisierbaren Zusammensetzung eingesetzten Mikrogele weisen üblicherweise in Toluol bei 23°C einen Quellungsindex ("QI") von weniger als 80, Bevorzugt von weniger als 60 und insbesondere von weniger als 40 auf. Besonders bevorzugt liegt der Quellungsindex der Mikrogele im Bereich von 1 bis 30, insbesondere im Bereich von 1 bis 20. Der Quellungsindex QI wird aus dem Gewicht des in Toluol bei 23°C für 24 Stunden gequollenen lösungsmittelhaltigen Mikrogels (nach Zentrifugation mit 20.000 Upm) und dem Gewicht des trockenen Mikrogels gemäß folgender Formel berechnet:

$$QI = \text{Naßgewicht des Mikrogels} / \text{Trockengewicht des Mikrogels.}$$

Zur Ermittlung des Quellungsindex läßt man 250 mg des Mikrogels in 25 ml Toluol 24 h unter Schütteln quellen. Das Gel wird abzentrifugiert und gewogen und anschließend bei 70 °C bis zur Gewichtskonstanz getrocknet und nochmals gewogen.

In der erfmdungsgemäßen vulkanisierbaren Zusammensetzung weisen die eingesetzten Mikrogele bevorzugt Glastemperaturen $T_g$ im Bereich von -90°C bis +150°C, besonders bevorzugt im Bereich von -80°C bis +120°C auf.

Die eingesetzten Mikrogele besitzen ferner üblicherweise eine Breite des Glasübergangs ("ΔTg") von größer als 5 °C, bevorzugt von größer als 10°C, besonders bevorzugt von größer als 20 °C auf. Mikrogele, die eine solche Breite des Glasübergangs aufweisen, sind in der Regel im Gegensatz zu vollständig homogenen Mikrogelen, wie sie z.B. durch eine Strahlenvernetzung erhalten werden, nicht vollständig homogen verheizt. Dies führt dazu, dass die Moduländerung von der Matrixphase zur dispergierten Phase nicht unmittelbar ist. Hierdurch kommt es bei plötzlicher Beanspruchung nicht zu Abreißeffekten zwischen Matrix und dispergierter Phase, wodurch die mechanischen Eigenschaften, das Quellverhalten und das Knickbiegeverhalten vorteilhaft beeinflusst werden.

Die Bestimmung der Glastemperatur ($T_g$) und der Breite des Glasübergangs ($\Delta T_g$) der Mikrogele erfolgt mittels Differential-Seanning-Kalorimetrie-(DSC). Für die Bestimmung von $T_g$ und $\Delta T_g$ werden zwei Abkühl/Aufheiz-Zyklen durchgeführt. $T_g$ und $\Delta T_g$ werden im zweiten Aufheiz-Zyklus bestimmt. Für die Bestimmungen werden 10-12 mg des ausgewählten Mikrogels in einem DSC-Probenbehälter (Standard-Aluminium-Pfanne) von Perkin-Elmer eingesetzt. Der erste DSC-Zyklus wird durchgeführt, indem die Probe zuerst mit flüssigem Stickstoff auf -100°C abgekühlt und dann mit einer Geschwindigkeit von 20K/min auf +1 150°C aufgehcizt wird. Der zweite DSC-Zyklus wird durch sofortige Abkühlung der Probe begonnen, sobald eine Probentemperatur von +150°C erreicht ist. Die Abkühlung erfolgt mit einer Geschwindigkeit von ungefähr 320 K/min. Im zweiten Aufheizzyklus wird die Probe wie im ersten Zyklus noch einmal auf +150°C, aufgeheizt. Die Aufheizgeschwindigkeit im zweiten Zyklus ist erneut 20K/min. $T_g$ und $\Delta T_g$ werden graphisch an der DSC-Kurve des zweiten Aufheizvorgangs bestimmt. Für diesen Zweck werden an die DSC-Kurve drei Geraden angelegt. Die 1. Gerade wird am Kurventeil der DSC-Kurve unterhalb $T_g$, die 2. Gerade an dem durch $T_g$ verlaufenden Kurvenast mit Wendepunkt und die 3. Gerade an dem Kurvenast der DSC- Kurve oberhalb $T_g$ angelegt. Auf diese Weise werden drei Geraden mit zwei Schnittpunkten erhalten. Beide Schnittpunkte sind jeweils durch eine charakteristische Temperatur gekennzeichnet. Die Glastemperatur $T_g$ erhält man als Mittelwert dieser beiden Temperaturen und die Breite des Glasübergangs $\Delta T_g$ erhält man aus der Differenz der beiden Temperaturen.

Die in der erfindungsgemäßen Zusammensetzung enthaltenen Mikrogele sind prinzipiell bekannt und können in an sich bekannter Weise hergestellt werden (siehe zum Beispiel EP-A-0 405 216, EP-A-0 854 171, DE-A 42 20 563, GB-PS 1078400, DE-A-197 01489, DE-A-197 01 488, DE-A-198 34 804, DE-A-198 34 803, DE-A-198 34 802, EP-A-1 063 259, DE-A-199 39 865, DE-A-199 42 620, DE-A-199 42 614, DE-A-100 21 070, DE-A-100 38 488, DE-A-100 39 749, DE-A-100 52 287, DE-A-100 56 311 und DE-A-100 61 174).

Die erfindungsgemäß verwendeten Mikrogele sind insbesondere vernetzte Kautsehukpartikel auf Basis folgender Kautschuke:

| | |
|---|---|
| BR: | Polybutadien, |
| ABR: | Butadien/Acrylsäure-C1-4 Alkylestercopolymere, |
| IR: | Polyisopren, |
| SBR: | statistische Styrol-Butadien-Copolymerisate mit Styrolgehalten von > 0 bis < 100 Gewichtsprozent, |
| X-SBR: | carboxylierte Styrol-Butadien-Copolymerisate |
| FKM: | Fluorkautschuk, |
| ACM: | Acrylatkautschuk, |
| NBR: | Polybutadien-Acrylnitril-Copolymerisate mit Acrylnitrilgehalten von 5-60, vorzugsweise 10-50 Gewichtsprozent, |
| X-NBR: | carboxlierte Nitrilkautschuke |
| CR: | Polychloropren |
| IIR: | Isobutylen/Isopren-Copolymerisate mit Isoprengehalten von 0,5-10 Gewichtsprozent, |
| HNBR: | teil- und vollhydrierte Nitrilkautschuke |
| EPDM: | Ethylen-Propylen-Dien-Copolymerisate, |
| EAM: | Ethylen/Acrylatcopolymere, |
| EVM: | Ethylen/Vinylacetatcopolymere |
| Q: | Silikonkautschuke, |
| AU: | Polyesterurethanpolymerisate, |
| EU: | Polyetherurethanpolymerisate |
| ENR: | Epoxydierter Naturkautschuk oder Mischungen davon. |

Die Herstellung der unvernetzten Mikrogel-Ausgangsprodukte erfolgt zweckmäßig durch folgende Methoden:

1. Vernetzende Copolymerisation in Emulsion (Direktpolymerisation) unter Verwendung höherfunktioneller Monomere,
2. Vernetzung unvernetzter Latices z.B. durch Behandlung mit Vernetzungsmitteln wie z. B. Dicumylperoxid,
3. Umdispergierung von Polymeren, die nicht durch Emulsionspolymerisation zugänglich sind aus den entsprechenden Lösungen dieser Polymeren in organischen Lösungsmitteln und Vernetzung der auf diese Weise erhaltenen Sekundärlatices nach Methode **2**.
4. Funktionalisierung der nach Methoden 1 bis 3 erhaltenen Mikrogele mit geeigneten Methoden oder durch Pfropfung mit geeigneten Monomeren.

Bevorzugt sind die Mikrogele (B) solche, die nach Methoden 1 und 2 erhältlich sind. Besonders bevorzugt sind solche, die durch vernetzende Copolymerisation nach Methode 1 in Emulsion hergestellt werden, wobei bei der vernetzenden Polymerisation geeignete Monomere mit funktionalisierten, insbesondere hydroxyfunktionellen, Monomeren einpolymerisiert werden.

Bei der Herstellung der erfindungsgemäße verwendeten Mikrogele durch Emulsionspolymerisation werden beispielsweise folgende, radikalisch polymerisierbare Monomere eingesetzt: Butadien, Styrol, Acrylnitril, Isopren, Ester der Acryl- und Methacrylsäure. Tetrafluorethylen, Vinylidenfluorid, Hexafluorpropen, 2-Chlorbutadien, 2,3-Dichlorbutadien sowie doppelbindungshaltige Carbonsäuren wie z.B. Acrylsäure, Methacrylsäure, Maleinsäure, Itakonsäure etc., doppelbindungshaltige Hydroxyverbindungen wie z.B. Hydroxyethylmethacrylat, Hydroxyethylacrylat, Hydroxypropylmethacrylat, Hydroxypropylacrylat, Hydroxybutylmethacrylat, Hydroxybutylacrylat, Aminfunktionalisierte (Meth)acrylate, Acrolein, N-Vinyl-2-pyrollidon, N-Allyl-Harnstoff und N-Allyl-Thioharnstoff, sekundäre Amino-(meth)-acrylsäureester wie 2-tert-Butylaminoethylmethacrylat und 2-tert-Butylaminoethylmethacrylamid etc.

Die Vernetzung des Kautschukgels kann direkt während der Emulsionspolymerisation, wie durch Copolymerisation mit vernetzend wirkenden multifunktionellen Verbindungen oder durch anschließende Vernetzung wie untenstehend beschrieben, erreicht werden. Die direkte Vernetzung während der Emulsionspolymerisation ist, wie zuvor erwähnt, bevorzugt. Bevorzugte höher- bzw. multifunktionelle Comonomere sind Verbindungen mit mindestens zwei, vorzugsweise 2 bis 4 copolymerisierbaren C=C-Doppelbindungen, wie Diisopropenylbenzol, Divinylbenzol, Trivinylbenzol, Divinylether, Divinylsulfon, Diallylphthalat, Triallylcyanurat, Triallylisocyanurat, 1,2-Polybutadien, N,N'-m-Phenylenmaleimid, 2,4-Toluylenbis(maleimid) und/oder Triallyltrimellitat. Darüber hinaus kommen in Betracht die Acrylate und Methacrylate von mehrwertigen, vorzugsweise 2- bis 4-wertigen C2 bis C10 Alkoholen, wie Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit, Sorbit mit ungesättigten Polyestern aus aliphatischen Di- und Polyolen sowie Maleinsäure, Fumarsäure, und/oder Itaconsäure.

Beispiele schließen ein: Ethylenglykoldi(meth)acrylat, Propylenglykoldi(meth)acrylat, 1,4-Butandioldi(meth) acrylat, 1,6-Hexandioldi(meth)acrylat, Trimethylolpropandi(meth)acrylat, Trimethylolpropantri(meth)acrylat etc. Die höherfunktionellen Monomere können allein und i Kombination verwendet werden. Mengenanteile dieser Monomere liegen beispielsweise bei etwa 0,01 bis 10 Gew.-% bezogen auf die Gesamtmasse der Mikrogele.

Beispiele für eine direkte Vernetzung bei der Polymerisation sind beispielsweise beschrieben in: EP-4-1 664 158, EP-A-1 149 866, EP-A-1 149 867, EP-A-1 298 166, EP-A-1291 369, EP-A-1 245 63U.

Die Vernetzung zu Kautschuk-Mikrogelen während der Emulsionspolymerisation kann auch durch Fortführung der Polymerisation bis zu hohen Umsätzen oder im Monomerzulaufverfahren durch Polymerisation mit hohen internen Umsätzen erfolgen. Eine andere Möglichkeit besteht auch in der Durchführung der Emulsionspolymerisation in Abwesenheit von Reglern.

Für die Vernetzung der unvernetzten oder der schwach vernetzten Mikrogel-Ausgangsprodukte im Anschluß an die Emulsionspolymerisation setzt man am besten die Latices ein, die bei der Emulsionspolymerisation erhalten werden. Auch Naturkautschuklatices können auf diese Weise vernetzt werden.

Geeignete, vernetzend wirkende Chemikalien sind beispielsweise organische Peroxide, wie Dicumylperoxid, t-Butylcumylperoxid, Bis-(t-butyl-peroxy-isopropyl)benzol, Di-t-butylperoxid, 2,5-Ditmethylhexan-2,5-dihydroperoxid, 2,5-Dimethylhexin-3,2,5-dihydroper-oxid, Dibenzoylperoxid, Bis-(2,4-dichlorobcnzoyl)peroxid, t-Butylperbenzoat sowie organische Azoverbindungen, wie Azo-bis-isobutyronitril und Azo-bis-cyclohexannitril sowie Di- und Polymercaptoverbindungen, wie Dimercaptoethan, 1,6-Dimercaptohexan, 1,3,5-Trimercaptotriazin und Mercapto-terminierte Polysulfidkautschuke wie Mercapto-terminierte Umsetzungsprodukte von Bis-Chlorethylformal mit Natriumpolysulfid.

Die optimale Temperatur zur Durchführung der Nachvernetzung ist naturgemäß von der Reaktivität des Vernetzers abhängig und kann bei Temperaturen von Raumtemperatur bis ca. 180 °C gegebenenfalls unter erhöhtem Druck durchgeführt werden (siehe hierzu Houben-Weyl, Methoden der organischen Chemie, 4. Auflage, Band 14/2, Seite 848). Besonders bevorzugte Vernetzungsmittcl sind Peroxide.

Die Vernetzung C=C-Doppelbindungen enthaltender Kautschuke zu Mikrogelen kann auch in Dispersion bzw. Emulsion bei gleichzeitiger, partieller, ggf. vollständiger, Hydrierung der C=C Doppelbindung durch Hydrazin wie in US 5,302,696 oder US 5,442,009 beschrieben oder ggf. andere Hydrierungsmitteln, beispielsweise Organometallhydridkomplexe erfolgen.

Vor, während oder nach der Nachvernetzung kann ggf. eine TeilchenvergröBerung durch Agglomeration durchgeführt werden.

Die erfindungsgemäß verwendeten Mikrogele sind durch Hydroxyl-Gruppen insbesondere auch an der Oberfläche davon modifiziert. Der Hydroxylgruppengehalt der Mikrogele wird durch Umsetzung mit Acetanhydrid und Titration der hierbei frei werdenden Essigsäure mit KOH nach DIN 53240 als Hydroxyl-Zahl mit der Dimension mg KOH/g Polymer bestimmt. Die Hydroxylzahl der Mikrogele liegt bevorzugt zwischen 0,1-100, noch bevorzugter 1 bis 100 mg KOH/g Mikrogel, noch bevorzugter 3 bis 70 mg KOH / Gramm Mikrogels, noch bevorzugter 5 bis 50 mg KOH Gramm Mikrogel.

Die Einführung der Hydroxylgruppen in die erfindungsgemäß verwendeten Mikrogele gelingt insbesondere durch die Verwendung doppelbindungshaltiger Hydroxyverbindungen wie z.B. Hydroxyalkyl(meth)acrylate wie 2-Hydroxyethyl(meth)acrylat, 2-Hydroxypropyl(meth)acrylat, 3-Hydroxypropyl(meth)acrylat, 2-Hydroxybutyl(meth)acrylat, 3-Hydroxybutyl(meth)acrylat und 4-hydroxybutyl(meth)acrylat etc.; Mono(meth)acrylates von Polyalkylenoxyglykol (mit 2 bis 23 Alkylenoxyeinheiten) wie Polyethylenglykol, Polypropylenglykol etc.; Hydroxygruppenenthaltende ungesättigte Amide, wie N-Hydroxymethyl(meth)acrylamid, N-(2-Hydroxyethyl)(meth)acrylamid und N,N-Bis(2-hydroxyethyl)(meth)acrylamid, etc.; Hydroxygruppen-enthaltenden vinylaromatische Verbindungen, wie o-Hydroxystyrol, m-Hydroxystytol, p-Hydroxystyrol, o-Hydroxy-alpha-ethylstyrol, m-Hydroxy-alpha-methylstyrol, p-Hydroxy-alpha-methylstyrol und p-Vinylbenzylallcohol, etc.; (Meth)allylalkohol-Verbindungen compounds, etc.

Der Ausdruck "(meth)acrylat" schließt in dieser Anmeldung jeweils die Acrylate und Methacrylate ein.

Weiterhin können die Hydroxygruppen auch durch nachträgliche Modifizierung von nichthydroxylgruppen-haltigen Mikrogelen erhalten werden.

Erfindungsgemäß bevorzugte Mikrogele sind solche auf Basis von Styrol, Butadien und HydroaU..)'I(mcth) acrylaten, wie HEMA, welche direkt vernetzt werden unter Zusatz polyfunktioneller Verbindungen, wie insbesondere Polyacrylate, wie TrimethylolpropanTriacrylat.

<u>**Schwefelhaltige siliciumorlanische Verbindungen d)**</u>

Die schwefelhaltigen siliciumorganischen Verbindungen d) weisen im Allgemeinen jeweils mindestens eines

der folgenden Strukturelemente auf:

- ein siliciumorganisches Strukturelement, insbesondere eine Alkoxysilyl-, bevorzugt eine Trialkoxysilylgruppe,
- ein schwefelhaltiges Strukturelement, insbesondere einen Sulfid- oder Polysulfidrest $S_x$, worin x im Mittel etwa 1 bis 10, bevorzugt 1 bis 6 sein kann,
- eine zweiwertige sogenannte Spacergruppe Q, die das silicumorganische Strukturelement mit dem schwefelhaltigen Strukturelement verbindet.

Als schwefelhaltigen Organosiliciumverbindungen kommen insbesondere solche der folgende Grundstrukturen in Betracht:

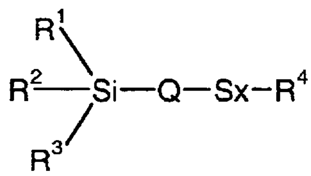
,

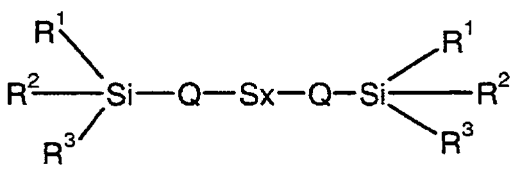
,

worin

x im Mittel 1 bis 10, bevorzugt 1 bis 6 sein kann,

$R^1$, $R^2$ und $R^3$ Alkoxygruppen mit vorzugsweise 1 bis 10 Kohlenstoffatomen bedeuten,

Q eine Spacergruppe darstellt, insbesondere auf der Basis von aliphatischen, heteroaliphatischen, aromatischen oder heteroaromatischen Kohlenstoffketten mit 1 bis 20 Kohlenstoffatomen, bevorzugt 1 bis 10 Kohlenstoffatomen und 1 bis 3 Heteroatomen, wie Sauerstoff, Schwefel, Stickstoff,

$R^4$ Wasserstoff, Alkyl und/oder einen Rest darstellt mit nachfolgenden Strukturen:

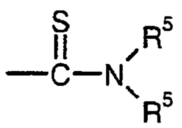
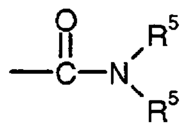
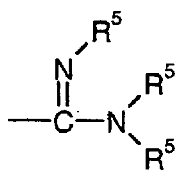

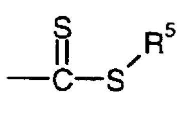
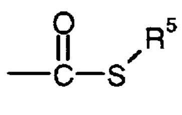
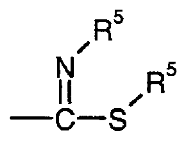

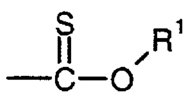
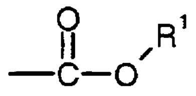
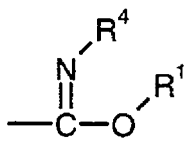

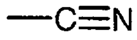
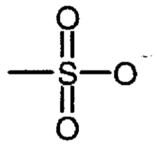
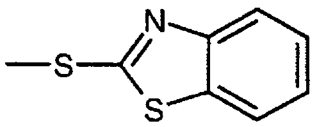

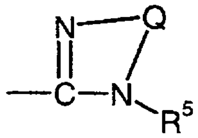
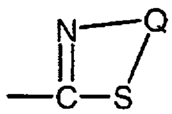
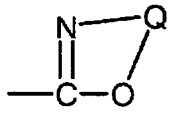

worin $R^5$ für einen aliphatischen, heteroaliphatischen, cycloaliphatischen, aromatischen oder heteroaromatischen Rest mit 1 bis 20, bevorzugt 1 bis 10, Kohlenstoffatomen und 1 bis 3 Heteroatomen, wie Sauerstoff, Stickstoff oder Schwefel steht.

Bevorzugte schwefelhaltige Organosiliciumverbindungen sind Bis(tri-ethoxy-silyl-propyl-polysulfane) der folgenden Strukturformel:

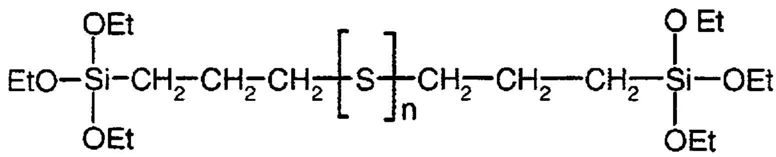
,

mit n = 2 bis 4. Solche Produkte sind kommerziell unter dem Namen Silan Si 75 (n = 2) und als Silan Si 69 (n = 4) der Fa. Degussa verfügbar.

Die schwefelhaltigen siliciumorganischen Verbindungen werden zweckmäßig in Gesamtmengen von 0,2 phr bis 12 phr eingesetzt.

Erfindungsgemäß ist es wesentlich, dass die schwefelhaltigen siliciumorganischen Verbindungen d) in mindestens zwei separaten Portionen zugesetzt werden. Separat bedeutet, dass zwischen der Zugabe der Portionen ein zeitlicher Abstand liegt. Dem Fachmann ist klar was dies in der Praxis bedeutet, ohne dass eine untere Grenze für den zeitlichen Abstand festgelegt wird. Bevorzugt liegt der zeitliche Abstand mindestens bei etwa 1 Minute, noch bevorzugter bei mindestens 20 Minuten bis hin zu 6 oder 8 Stunden, abhängig von Kautschukmischung und Mischapparatur. Bevorzugt erfolgt die Zugabe während mindestens zweier verschiedener Mischstufen bei erhöhten Temperaturen von insbesondere mehr als 60°C, zwischen denen insbesondere ein Abkühlschritt liegt.

**Vulkanisationsmittel e)**

Erfindungsgemäß verwendete Vulkanisationsmittel sind insbesondere Schwefel oder Schwefelspender wie zum Beispiel Dithiomorpholin (DTDM) oder 2-(4-Morpholino-dithio)benzothiazol (MBSS). Schwefel und Schwefelspender werden in Mengen von beispielsweise 0,1 bis 15 Gewichtsteilen, bevorzugt 0,1-10 Gewichtsteile, bezogen auf die gesamte Menge an Kautschuk eingesetzt.

**Kautschukadditive f):**

Zu den erfindungsgemäß eingesetzten Kautschukadditiven zählen insbesondere die Vulkanisationsbeschleuniger. Beispiele für geeignete Vulkanisationsbeschleuniger sind z.B. Mercaptobenzthiazole, -sulfenamide, Guanidine, Thiuramdisulfide, Dithiocarbamate, Thioharnstoffe, Thiocarbonate sowie Dithiophosphate etc. (Ullmann's Encyclopedia of Industrial Chemistry, VCH Verlagsgesellschaft mbH, D-69451 Weinheim, 1993, vol A 23 "Chemicals and Additives", S. 366-417).

Die Vulkanisationsbeschleuniger werden zweckmäßig nicht in einem Mischschritt bei erhöhten Temperaturen zugesetzt, der zur Aktivierung des hydroxylgruppenhaltigen oxidischen Füllstoffs, wie der Kieselsäure bzw. der Mikrogele mittels der schwefelhaltigen siliciumorganischen Verbindungen durchgeführt wird, eingesetzt, da sie zu einer vorzeitigen Anvulkanisation der Mischung führen würden. Sie werden daher bevorzugt nach Zugabe der schwefelhaltigen siliciumorganischen Verbindungen bei Temperaturen von bevorzugt unter 100°C eingearbeitet.

Die Vulkanisationsbeschleuniger werden bevorzugt in Mengen von 0,1 bis 15 Gewichtsteilen, bevorzugt 0,1-10 Gewichtsteilen, bezogen auf die gesamte Menge an Kautschuk eingesetzt.

Die erfindungsgemäß hergestellten Kautschukmischungen enthalten bevorzugt mindestens einen Vulkanisationsbeschleuniger. Häufig enthalten die Mischungen mehrere Beschleuniger gegebenenfalls in Kombination mit Aktivatoren.

Die erfindungsgemäß hergestellten Kautschukmischungen enthalten bevorzugt weitere an sich bekannte Kautschukadditive.

Dazu zählen insbesondere auch weitere Füllstoffe, wie insbesondere Ruß, welcher in den erfindungsgemäß hergestellten Kautschukmischungen bevorzugt verwendet wird.

Erfindungsgemäß hergestellte Ruße (E) siehe "carbon" bzw. "carbon black" (Ullmann's Encyclopedia of Industrial Chemistry, VCH Verlagsgesellschaft mbH, D-69451 Weinheim, 1993, vol A 5 "Carbon Black", S.95-158) werden bevorzugt nach dem gas black-, furnace black-, lamp black- und thermal black- Verfahren hergestellt und werden nach der neuen ASTM-Nomenklatur (ASTM D 1765 und D 2516) als N 110, N 115, N 121, N 125, N 212, N 220, N 231, N 234, N 242, N 293, N 299, S 315, N 326, N 330, N 332, N 339, N 343, N 347, N 351, N 375, N 472, N 539, N 550, N 582, N 630, N642, N 650, N 660, N 683, N 754, N 762, N 765, N 772, N 774, N 787, N 907, N 908 N 990, N 991 S 3 etc. bezeichnet. Die erfindungsgemäß verwendeten Ruße besitzen bevorzugt BET-Oberflächen zwischen 5 bis 200 $m^2/g$.

Ruß wird erfindungsgemäß bevorzugt in Mengen von 0 bis 120 phr, vorzugsweise 1 bis 100 phr, noch bevorzugter 5 bis 80 phr eingesetzt.

Erfindungsgemäß liegt die Gesamtmenge von hydroxylgruppen-haltigem oxidischen Füllstoff b) und Ruß bevorzugt bei 20 bis 160 phr, vorzugsweise 25 bis 140 phr.

Weitere Füllstoffe, die gegebenenfalls eingesetzt werden, sind:

- synthetische Silikate, wie Aluminiumsilikat, Erdalkalisilikat, wie Magnesiumsilikat oder Calciumsilikat mit BET-Oberflächen von 20-400 $m^2/g$ und Primärteilchendurchmessern von 5-400 nm
- natürliche Silikate, wie Kaolin und andere natürlich vorkommende Kieselsäuren,
- Metalloxide, wie Zinkoxid, Calciumoxid, Magnesiumoxid, Aluminiumoxid,
- Metallcarbonate, wie Calciumcarbonat, Magnesiumcarbonat, Zinkcarbonat,
- Metallsulfate, wie Calciumsulfat, Bariumsulfat,
- Metallhydroxide, wie Aluminiumhydroxid und Magnesiumhydroxid,
- Glasfasern und Glasfaserprodukte (Latten, Stränge oder Mikroglaskugeln),
- Thermoplaste (Polyamid, Polyester, Aramid, Polycarbonat, syndiotaktisches 1,2 Polybutadien und trans-1,4-Polybutadien sowie Cellulose und Stärke,

welche sämtlich nicht unter die Definition der Komponente b) fallen.

Weitere Kautschukadditive umfassen Alterungsschutzmittel, Reversionsschutzmittel, Lichtschutzmittel, Ozonschutzmittel, Verarbeitungshilfsmittel, Weichmacher, Mineralöl, Tackifier, Treibmittel, Farbstoffe, Pigmente, Wachse, Harze, Streckmittel, organische Säuren, Vulkanisationsverzögerer, Vulkanisationsaktivatoren, wie Zinkoxid, Stearinsäure, sowie Zinkstearat, Metalloxide, sowie weitere Füllstoffaktivatoren, wie beispielsweise Triethanolamin, Trimethylolpropan, Polyethylenglykol, Hexantriol, aliphatische Trialkoxysilane oder anderen, die in der Gummiindustrie bekannt sind (Ullmann's Encyclopedia of Industrial Chemistry, VCH Verlagsgesellschaft mbH, D-69451 Weinheim, 1993, vol A 23 "Chemicals and Additives", S. 366-417).

Die Kautschukadditive werden in üblichen Mengen, die sich u. a. nach dem Verwendungszweck richten, eingesetzt. Übliche Mengen für einzelne Kautschukadditive mit Ausnahme der weiteren Füllstoffe, wie insbesondere Ruß bzw. Mineralöl liegen beispielsweise bei 0,1 bis 50 phr.

Die Mischungsherstellung erfolgt zweckmäßig in mindestens zwei Stufen, wobei bevorzugt in der ersten von mindestens zwei Mischstufen die Mischungsbestandteile a) + b) + c) sowie 30% bis 80 %, vorzugsweise 40 bis 60 %

der Gesamtmenge der schwefelhaltigen siliciumorganischen Verbindung d) zur Mischung gegeben und bei Temperaturen von bevorzugt 80 bis 200, bevorzugter 120°C bis 190°C, noch bevorzugter 130°C bis 180°C thermomechanisch zwischen 1 bis 15 min, vorzugsweise 2 bis 10 min behandelt wird, wobei die Gesamtmenge an Mikrogel c) ganz oder teilweise während des ersten Mischschritts in der Kautschukmischung enthalten ist. Im ersten Mischschritt können zusätzlich zu den genannten Komponenten insbesondere weitere Kautschukadditive, wie Weichmacher, Vulkanisationsaktivatoren, wie Zinkoxdid, Stearinsäure, Vulkanisationsmittel, wie Schwefel, Alterungsschutzmittel sowie eine organische Base wie Diphenylguanidin oder Di-o-Tolylguanidin zugegeben werden, die bevorzugt nicht in Anwesenheit von Vulkanisationsmittel zugesetzt werden. Zweckmäßig werden im ersten Mischschritt keine Vulkanisationsbeschleuniger zugesetzt um ein Anvulkanisieren zu vermeiden.

Zweckmäßigerweise kühlt man die Kautschukmischung, die in der ersten Mischstufe erhalten wird, auf Temperaturen von < 140°C, vorzugsweise < 100°C ab, bevor die Restmenge an schwefelhaltiger siliciumorganischer Verbindung und die weiteren Komponenten zugegeben werden. Auch eine Lagerung der Mischungen bei Raumtemperatur zwischen erster und zweiter Mischstufe ist möglich.

Bevorzugt wird in der zweiten Mischstufe der in der ersten Mischstufe erhaltenen Mischung die Restmenge an schwefelhaltiger siliciumorganischer Verbindung zugesetzt und bei Temperaturen von bevorzugt 80 bis 200, bevorzugter 120°C bis 190°C, noch bevorzugter 130°C bis 180°C thermomechanisch zwischen 1 bis 15 min, vorzugsweise 2 bis 10 min thermomechanisch behandelt. Im zweiten Mischschritt können zusätzlich zu den genannten Komponenten weitere Kautschukadditive wie Weichmacher, Zinkoxdid, Stearinsäure, Schwefel, Alterungsschutzmittel sowie eine organische Base wie Diphenylguanidin oder Di-o-Tolylguanidin zugegeben werden, falls dies noch nicht im ersten Mischschritt erfolgt ist. Zweckmäßig werden auch im zweiten Mischschritt keine Vulkanisationsbeschleuniger zugesetzt um ein Anvulkanisieren bei den hohen Temperaturen zu vermeiden.

Zweckmäßigerweise kühlt man die Kautschukmischung, die in der zweiten Mischstufe erhalten wird, auf Temperaturen < 100°C, vorzugsweise < 80°C ab, bevor weitere Komponenten und insbesondere der oder die Vulkanisationsbeschleuniger zugegeben werden. Auch eine Lagerung der Mischung bei Raumtemperatur zwischen zweiter und dritter Mischstufe ist möglich.

Bei der thermomechanischen Behandlung der Kautschukmischung im ersten und zweiten Mischschritt muss eine Anvulkanisation (Anscorchen) der Mischung verhindert werden. Aus diesem Grund wird die thermomechanische Behandlung ohne Zusätze, die zu einer Anvulkanisation der Mischung führen würden, durchgeführt. Aus diesem Grund muss die Zugabe von Vulkanisationsbeschleunigern und gegebenenfalls auch von Schwefeldonoren, verkappten Bismercaptanen sowie Schwefel und gegebenenfalls von Zinkoxid und Stearinsäure am Ende des zweiten Mischschritts nach Abkühlung der Mischung auf Temperaturen < 120°C, vorzugsweise < 100°C, besonders bevorzugt < 80°C zugegeben werden.

Die Zugabe der Beschleuniger kann auch in einer dritten Mischstufe, die bei Temperaturen < 60°C z. B. auf einer Walze durchgeführt wird, erfolgen.

Geeignete Aggregate für die Mischungsherstellung sind an sich bekannt und schließen beispielsweise Walzen, Innenmischer oder auch Mischextruder ein.

Die Vulkanisation der erfindungsgemäß hergestellten Kautschukmischungen wird bevorzugt bei Temperaturen von 100-250°C, bevorzugt 130-180°C, gegebenenfalls unter Druck von 1 bis 100 bar durchgeführt.

Die erfindungsgemäß hergestellten Kautschukmischungen eignen sich zur Herstellung verschiedener Reifenbauteile insbesondere für Reifenlaufflächen, Subtreads, Karkassen, Seitenwänden, verstärkten Seitenwänden für Notlaufreifen, Apexmischungen etc. sowie für die Herstellung von technischen Gummiartikeln wie Dämpfungselementen, Walzenbelägen, Belägen von Förderbändern, Riemen, Spinnkopsen, Dichtungen, Golfballkernen, Schuhsohlen, etc. Besonders geeignet sind die Mischungen für die Herstellung von Reifenlaufflächen, Subtreads, Karkassen und Apexmischungen. Reifen bzw. Reifenteile schließen dabei auch beispielsweise Laufflächen von Sommer-, Winter- und All-Seasons-Reifen sowie Laufflächen von PKW- und LKW-Reifen ein.

Die Erfindung wird anhand der folgenden Beispiele veranschaulicht.

**Beispiele:**

**Kautschukgel:**

Für die vorliegende Erfindung wurde ein SBR-Gel mit einer Tg = -15°C eingesetzt. Dieses Gel hat in Toluol einen unlöslichen Anteil von 94,8 Gew. %. Der Quellungsindex in Toluol beträgt: 7,35. Die Hydroxylzahl beträgt 32,8 mgKOH/g Gel.

Die Herstellung des Gels erfolgte durch Copolymerisation einer Monomermischung, deren Zusammensetzung in nachfolgender Tabelle aufgelistet ist, wobei die in EP 1 298 166 unter der Überschrift "[1] Production of Rubber Gel" im Abschnitt [0077] offen gelegten Polymerisationsbedingungen angewandt wurden.

| Monomere | Mengenanteile [Gew.-Teile] |
|---|---|
| Butadien | 44,5 |
| Styrol | 46,5 |
| Trimethylolpropantrimethacrylat | 1,5 |
| Hydroxyethylmethacrylat | 7,5 |

Die weitere Behandlung und Aufarbeitung des bei der Polymerisation erhaltenen Gel-Latex erfolgte wie in EP 1245 630 "Production Example 1: Production of Conjugated Diene-Based Rubber Gel 1 unter den Abschnitten [0103] und [0104] beschrieben.

**Variation der Zugabereihenfolge von Mikrogel und schwefelhaltiger siliciumordanischer Verbindung**

Versuch 1 ist ein Vergleichsbeispiel, bei dem als Füllstoff im Wesentlichen Kieselsäure (80 phr) neben Ruß (5 phr) ohne Mikrogel eingesetzt wird. Die Aktivierung der Kieselsäure erfolgt mit Bis(tri-ethoxy-siliylpropyl-monosulfan) (Si 75 der Degussa Hüls AG), wobei die gesamte Silanmenge in der 1. Mischstufe zugesetzt wird.

Versuch 2 ist ein Vergleichsbeispiel, bei dem die Kautschukmischung neben Kieselsäure (80 phr) auch Mikrogel (20 phr) sowie etwas Ruß (5 phr) enthält. Die Aktivierung von Kieselsäure und Mikrogel erfolgt mit Bis(tri-ethoxy-siliylpropyl-monosulfan) (Si 75 der Degussa Hüls AG), wobei die Gesamtmenge an schwefelhaltigem Organosilan in der 1. Mischstufe eingesetzt wird.

Die Versuche ***6*** und ***7*** sind nicht erfindungsgemäße Vergleichsversuche, bei denen im ersten Mischschritt lediglich 20% der Gesamtmenge an schwefelhaltigen Organosilan zugesetzt werden. 80 % der Gesamtmenge des schwefelhaltigem Organosilan (= schwefelhaltige siliciumorganische Verbindung d)) wurden im zweiten Mischschritt zugesetzt.

Die Versuche ***3***, ***4 und 5*** dieser Studie sind erfindungsgemäße Beispiele, bei denen im ersten Mischschritt 75 % (Versuche ***3*** und ***4***) und 50% (Versuch ***5***) der Gesamtmenge an schwefelhaltigen Organosilan zugesetzt wurden. Die Restmenge an schwefelhaltigem Organosilan wurde bei diesen Beispielen im zweiten Mischschritt zugesetzt. Bei Versuch *4* wurde auch das Mikrogel erst im 2. Mischschritt zugesetzt.

**1. Mischstufe**

| ***Compound Nr.*** | ***1*** | ***2*** | ***3*** | ***4*** | ***5*** | ***6*** | ***7*** |
|---|---|---|---|---|---|---|---|
| Usungs-SBR 1) | 110 | 110 | 110 | 110 | 110 | 110 | 110 |
| Polybutadiens 2) | 20 | 20 | 20 | 20 | 20 | 20 | 20 |
| Mikrogel 3) | - | 20 | 20 | - | 20 | 20 | - |
| Kieselsäure 4) | 80 | 80 | 80 | 80 | 80 | 80 | 80 |
| Mineral | 7,5 | 7,5 | 7,5 | 7,5 | 7,5 | 7,5 | 7,5 |
| Zinkoxid6) | 2,5 | 2,5 | 2,5 | 2,5 | 2,5 | 2,5 | 2,5 |
| Stearinsäure7) | 1 | 1 | 1 | 1 | 1 | 1 | 1 |
| TMQ8) | 1 | 1 | 1 | 1 | 1 | 1 | 1 |
| 6 PPD9) | 1 | 1 | 1 | 1 | 1 | 1 | 1 |
| Ozonwachs10) | 1,4 | 1,4 | 1,4 | 1,4 | 1,4 | 1,4 | 1,4 |
| Si7511) | **6,4** | **6,4** | **4,8** | **4,8** | **3,2** | **1,3** | **1,3** |
| Maximale Temperatur °C] | 150 | 150 | 150 | 150 | 150 | 150 | 150 |
| Zeit bei max.Temperatur [min.] | 6 | 6 | 6 | 6 | 6 | 6 | 6 |

(fortgesetzt)

| Compound Nr. | 1 | 2 | 3 | 4 | 5 | 6 | 7 |
|---|---|---|---|---|---|---|---|
| Abkühlung und Lagerung bei 23°C [h] | 24 | 24 | 24 | 24 | 24 | 24 | 24 |

1) Buna® VSL 5025-1 HM der Lanxess Deutschland GmbH (mit 37,5 phr Mineralöl verstreckt)
2) Buna® CM 25 (Neodym-Polybutadien) der Lanxess Deutschland GmbH
3) Mikrogels
4) Vulkasil S der Lanxcss Deutschland GmbH
5) Enerthene 1849-1
6) 7.inl.-weiss Rotsiegel der Firma Grillo Zinkoxid GmbH
7) Edenor C 18 98-100 der Firma Cognis Deutschland GmbH
8) 2 2,4-Trimethyl-1,2-dihydrochinonlin, polymerisiert (Vulkanox® HS/LG der Lanxess Deutschland GmbH)
9) N-1,3 -Dimethylbutyl-N'-phenyl-p-phenylendianün (Vulkanox® 4020/LG der Lanxess Deutschland GmbH)
10) Antilux® 654 der RheinChemie GmbH
11) Bis(tri-ethoxy-sitylpropyl-monosulfan) (Si 75 der Degussa Hüls AG)

**2. Mischstufe**

| Compound Nr. | 1 | 2 | 3 | 4 | 5 | 6 | 7 |
|---|---|---|---|---|---|---|---|
| Mikrogel | - | - | - | 20 | - | - | 20 |
| Si75 | - | - | 1,6 | 1,6 | 3,2 | 5,1 | 5,1 |
| Maximale Temperatur[°C] | 150 | 150 | 150 | 150 | 150 | 150 | 150 |
| Zeit bei max. Temperatur [min.] | 6 | 6 | 6 | 6 | 6 | 6 | 6 |
| Abkühlung und Lagerung bei 23°C [h] | 24 | 24 | 24 | 24 | 24 | 24 | 24 |

**3. Mischstufe (Walze)**

| Compound Nr. | 1 | 2 | 3 | 4 | 5 | 6 | 7 |
|---|---|---|---|---|---|---|---|
| Ruß[12)] | 5 | 5 | 5 | 5 | 5 | 5 | 5 |
| Schwefel[13)] | 1.9 | 1,9 | 1,9 | 1,9 | 1,9 | 1,9 | 1,9 |
| CBS[14)] | 1,9 | 1,9 | 1,9 | 1,9 | 1,9 | 1,9 | 1,9 |
| DPG[15)] | 2,3 | 2,3 | 2,3 | 2,3 | 2,3 | 2,3 | 2,3 |
| Maximale Temperatur [°C] | < 50 | < 50 | < 50 | < 50 | < 50 | < 50 | < 50 |

12) Corax N 234 der Degussa Hülsa AG
13) Löslicher Schwefel (Mahlschwefel 90/95° Chancel® der Firma Solvay Barium Strontium)
14) N-Cyclohexyl-2-benzthiazylsulfenamid (Vulkanox® CZ/C der Lanxess Deutschland GmbH)
15) Diphenylguanidin (Vulkacit® D/C der Lanxess Deutschland GmbH)

An der unvulkanisierten Kautschukmischung wurden die Mooneyviskosität und die Mooneyrelaxation nach 10 und 30 sec bestimmt. Es zeigt sich, dass die erfindungsgemäßen Versuche ***3*** und ***5*** niedrigere Mooneyviskositäten (ML1+1 und ML1+4 jeweils bei 100°C) sowie niedrigere Mooneyrelaxationen nach 10 und 30 sec als die Vergleichsversuche 1 und 2 aufweisen. Dies bedeutet, dass die erfindungsgemäß hergestellten Mischungen leichter verarbeitbar als die Vergleichsversuche ***1*** und ***2*** sind.

***Mischungsprüfung***

| ***Compound Nr.*** | ***1*** | ***2*** | ***3*** | ***4*** | ***5*** | ***6*** | ***7*** |
|---|---|---|---|---|---|---|---|
| ML 1+1 (100°C) [ME] | 133,9 | 116,3 | 114,6 | 130 | 109,7 | 103,5 | 114,2 |
| ML 1+4 (100°C) [ME] | 98,8 | 99,4 | 97,3 | 110,5 | 92 | 89,5 | 97,2 |
| Mooncyrelaxation/10sec.[%] | 31,6 | 30,3 | 29,3 | 33,2 | 28,8 | 27,7 | 29,4 |
| Mooneyrelaxation /30 sec. [%] | 24,5 | 23,3 | 22,5 | 27,2 | 22,2 | 20,9 | 23,3 |

Das Vulkanisationsverhalten der Mischungen wird im Rheometer bei 160°C nach DIN 53 529 mit Hilfe des Monsantorheometers MDR 2000E untersucht. Auf diese Weise wurden charakteristische Daten wie $F_a$, $F_{max}$, $F_{max.}$-$F_a$, $t_{10}$, $t_{50}$, $t_{90}$ und $t_{95}$ bestimmt.

Nach DIN 53 529, Teil 3 bedeuten:

$F_a$: Vulkameteranzeige im Minimum der Vernetzungsisotherme
$F_{max}$: Maximum der Vulkameteranzeige
$F_{max}$ - $F_a$: Differenz der Vulkameteranzeigen zwischen Maximum und Minimum
$t_{10}$: Zeit, bei der 10% des Umsatzes erreicht sind
$t_{50}$: Zeit, bei der 50% des Umsatzes erreicht sind
$t_{90}$: Zeit, bei der 90% des Umsatzes erreicht sind
$t_{95}$: Zeit, bei der 95% des Umsatzes erreicht sind

**Vulkameterprüfung**

| ***Compound Nr.*** | ***1*** | ***2*** | ***3*** | ***4*** | ***5*** | ***6*** | ***7*** |
|---|---|---|---|---|---|---|---|
| $F_a$ [dNm] | 3,59 | 4,72 | 4,66 | 6,11 | 4,31 | 4,26 | 5,33 |
| $F_{max}$ [dNm] | 20,15 | 18,2 | 18,36 | 19,73 | 17,75 | 17,77 | 18,51 |
| $F_{max}$-$F_a$ [dNm] | 16,56 | 13,48 | 13,70 | 13,62 | 13,44 | 13,51 | 13,18 |
| $t_{10}$ [sec] | 91 | 118 | 122 | 112 | 126 | 125 | 113 |
| $t_{50}$ [sec] | 188 | 211 | 213 | 204 | 217 | 211 | 202 |
| $t_{90}$ [sec] | 685 | 615 | 630 | 665 | 660 | 589 | 578 |
| $t_{95}$ [sec] | 985 | 878 | 896 | 940 | 935 | 883 | 849 |
| $t_{90}$-$t_{10}$ [sec] | 497 | 404 | 417 | 461 | 443 | 378 | 376 |

Bei den erfindungsgemäßen Beispielen ***3, 4*** und ***5*** sind die Einflüsse der Gel- und Silandosierung ohne signifikante Auswirkungen auf Vulkanisationsverlauf, Vulkanisationsgeschwindigkeit und Vernetzungsgrade.

Die für die Vulkanisatcharakterisierung notwendigen Prüfkörper wurden durch Pressenvulkanisation der Mischungen bei einem Hydraulikdruck von 120 bar bei 160°C erhalten. Die Heizzeiten für die verschiedenen Compounds finden sich in beiliegender Tabelle:

| ***Vulkanisationszeit*** | | | | | | | |
|---|---|---|---|---|---|---|---|
| ***Compound Nr.*** | ***1*** | ***2*** | ***3*** | ***4*** | ***5*** | ***6*** | ***7*** |
| Temperatur[°C] | 160 | 160 | 160 | 160 | 160 | 160 | 160 |

(fortgesetzt)

| *Vulkanisationszeit* | | | | | | | |
|---|---|---|---|---|---|---|---|
| ***Compound Nr.*** | ***1*** | ***2*** | ***3*** | ***4*** | ***5*** | ***6*** | ***7*** |
| Zeit [min.] | 21 | 21 | 21 | 21 | 21 | 21 | 21 |

Die Vulkanisateigenschaften der erfindungsgemäßen Versuche ***3***, ***4*** und ***5*** und der nicht erfmdungsgemäßen Vergleichsversuche ***1, 2, 6*** und ***7*** sind in folgender Tabelle zusammengefasst.

| **Vulkanisateigenschaften** | | | | | | | |
|---|---|---|---|---|---|---|---|
| ***Compound Nr.*** | ***1*** | ***2*** | ***3*** | ***4*** | ***5*** | ***6*** | ***7*** |
| Shore A-Härte bei 23°C DIN 53505 | 64,9 | 62,4 | 62,3 | 62,7 | 62,1 | 61,1 | 61,3 |
| Shore A Härte bei 70°C DIN 53505 | 58,5 | 58 | 59 | 60 | 59 | 59 | 61 |
| Rückprallelastizität/0°C DIN 53512 [%] | 9 | 9 | 9 | 9 | 9 | 9 | 9 |
| Rückprallclastizitat/23°C DIN 53512 [%] | 26 | 23 | 23 | 20 | 23 | 24 | 22 |
| Rückprallelastizität/70°C DIN 53512 [%] | 58 | 61 | 62 | 62 | 63 | 62 | 62 |
| Rückprallelastizität/100°C | 66 | 69 | 69 | 69 | 69 | 70 | 69 |
| Delta R70-R23 | 32 | 38 | 39 | 42 | 40 | 38 | 40 |
| Compression Set/23°C [%] | 5,6 | 5,01 | 6,01 | 5,23 | 5,68 | 5,59 | 4,53 |
| Compression Set/70°C [%] | 14,42 | 14,41 | 14,32 | 14,28 | 15,23 | 15,74 | 14,78 |
| $\sigma_{10}$ DIN 53504 [MPa] | 0,6 | 0,5 | 0,6 | 0,6 | 0,5 | 0,5 | 0,5 |
| $\sigma_{25}$ DIN 53504 [MPa] | 1,0 | 0,9 | 0,9 | 1,0 | 0,9 | 0,9 | 0,9 |
| $\sigma_{50}$ DIN 53504 [MPa] | 1,5 | 1,4 | 1,4 | 1,5 | 1,4 | 1,3 | 1,4 |
| $\sigma_{100}$ DIN 53504 [MPa] | 2,6 | 2,7 | 2,8 | 3 | 2,8 | 2,6 | 2,7 |
| $\sigma_{300}$ DIN 53504 [MPa] | 13,8 | 16,2 | 16,4 | 16,2 | 16,8 | 15,4 | 15,0 |
| Zugfestigkeit DIN 53504 [MPa] | 21,4 | 20,1 | 20,4 | 20,2 | 20,2 | 20 | 19,9 |
| Bruchdehnung DIN 53504 [MPa] | 413 | 355 | 351 | 368 | 344 | 368 | 378 |
| $\sigma_{300}$ x $\varepsilon_b$ | 5699 | 5751 | 6388 | 5962 | 5779 | 5667 | 5670 |
| Abrieb DIN 53516 [mm3] | 117 | 116 | 115 | 113 | 115 | 121 | 116 |

| Dynamische Eigenschaften / Eplexor-Test* (Heizrate: 1 K/min) | | | | | | | |
|---|---|---|---|---|---|---|---|
| ***Compound Nr.*** | ***1*** | ***2*** | ***3*** | ***4*** | ***5*** | ***6*** | ***7*** |
| E' (0°C) /10 Hz [MPa] | 44,09 | 46,11 | 47,15 | 60,96 | 43,98 | 46,9 | 55,56 |
| E"(0°C) i 10 Hz [MPa] | 15,86 | 21,04 | 21,63 | 31,36 | 20,09 | 20,97 | 29,14 |
| tan $\delta$ (0°C) / 10 Hz | 0,36 | 0,456 | 0,459 | 0,515 | 0,457 | 0,447 | 0,525 |
| E' (60°C) / 10 Hz [MPa] | 10,57 | 7,01 | 7,03 | 6,73 | 6,66 | 7,01 | 6,28 |
| E"(60°C) / 10 Hz [MPa] | 1,15 | 0,66 | 0,68 | 0,59 | 0,62 | 0,68 | 0,56 |
| tan $\delta$ (60°C) / 10 Hz | 0,109 | 0,095 | 0,096 | 0,088 | 0,093 | 0,098 | 0,09 |
| tan $\delta$ (0°C) - tan $\delta$ (60°C) | 0,251 | 0,361 | 0,363 | 0,427 | 0,364 | 0,349 | 0,435 |
| * Eplexor 500 N (Gabo-Testanlagen GmbH, Ahlden, Deutschland) | | | | | | | |

Die erfindungsgemäß hergestellten Vulkanisate ***3, 4,*** und ***5*** zeigen im Vergleich mit den Vergleichsprodukten ***1*** und ***2*** größere oder mindestes gleich große Produkte von $\sigma_{300}$ x $\varepsilon_b$ ohne Einbußen in den Differenzen der Rückprallelastizitäten $\Delta$(R70-R23), d. h. die erfindungsgemäß hergestellten Vulkanisate weisen verbesserte mechanische Eigenschaften ohne Einbußen in der Nassrutschfestigkeits/Rollwiderstands-Relation auf.

Die Verbesserungen in der Nassrutschfestigkeits/Rollwiderstands-Relation werden durch dynamische Messungen (Eplexor-Test) bestätigt. Bei den Vulkanisaten ***3, 4,*** und ***5*** werden größere Differenzen für tan $\delta$ (0°C) - tan $\delta$ (60°C) als bei den Vergleichsversuchen ***1*** und ***2*** gefunden.

Durch die erfindungsgemäße sequentielle Silanisierung wird bei den Vulkanisaten ein verbessertes Produkt aus Spannungswert bei 300 % Dehnung und Bruchdehnung ($\sigma_{300}$ x $\varepsilon_b$) ohne Einbußen in der Differenz der Rückprallelastizitäten $\Delta(R_{70}$-$R_{23})$ erhalten.

**Patentansprüche**

1. Verfahren zur Herstellung von Kautschukmischungen, welches das Mischen folgender Komponenten umfasst:

   a) eine oder mehrere Kautschukkomponenten,
   b) ein oder mehrere hydroxylgruppen-haltiger oxidische Füllstoffe,
   c) ein oder mehrere hydroxylgruppen-haltiger Mikrogele,
   d) ein oder mehrere schwefelhaltige siliciumorganische Verbindungen,
   e) gegebenenfalls ein oder mehrere Vulkanisationsmittel,
   f) gegebenenfalls ein oder mehrere Kautschukadditive,

   **dadurch gekennzeichnet, dass** die schwefelhaltigen siliciumorganische Verbindung d) in mindestens zwei separaten Portionen zugesetzt wird, wobei die erste Portion mindestens 30 Gew.-% der Gesamtmenge der schwefelhaltigen siliciutnorganischen Verbindung d) umfasst.

2. Verfahren nach Anspruch 1, welches mindestens zwei Mischstufen umfasst.

3. Verfahren nach Anspruch 1 oder 2, worin der Zusatz der siliciumorganischen Verbindung d) in mindestens zwei verschiedenen Mischstufen erfolgt.

4. Verfahren nach einem oder mehreren der Ansprüche 1 bis 3, welches umfasst:

   (i) eine erste Mischstufe, worin
   eine oder mehrere Kautschukkomponenten a),
   ein oder mehrerer hydroxyl-haltige oxidische Füllstoffe b),
   ein oder mehrere hydroxylgruppen-haltige Mikrogelen c),
   ein oder mehrere schwefelhaltige siliciumorganische Verbindungen d), gegebenenfalls ein oder mehrere Vulkanisationsmittel e), sowie gegebenenfalls ein oder mehrere Kautschukadditive f),
   bei Temperaturen von mehr als 60 °C vermischt werden, wobei mindestens 30 Gew.-% der Gesamtmenge der schwefelhaltigen siliciumorganischen Verbindungen d) zugesetzt werden,
   (ii) gegebenenfalls Abkühlen der in der ersten Mischstufe erhaltenen Mischung,
   (iii) eine weitere, insbesondere zweite Mischstufe, worin mindestens ein weiterer Teil der Gesamtmenge der schwefelhaltigen siliciumorganische Verbindungen sowie gegebenenfalls eine oder mehrere der Komponenten a), b), c), e) und f) zugesetzt und bei Temperaturen von mehr als 60 °C vermischt werden.

5. Verfahren nach Anspruch 4, worin in der weiteren, insbesondere zweiten Mischstufe die gesamte restliche Menge der schwefelhaltigen siliciumorganischen Verbindung d) zugegeben wird.

6. Verfahren nach einem oder mehreren der Ansprüche 1 bis 5, worin die Komponente c) in mindestens zwei separaten Portionen zugesetzt wird.

7. Verfahren nach einem oder mehreren der Ansprüche 2 bis 6, worin ein Teil der Gesamtmenge der Komponente c) in einer ersten Mischstufe zugesetzt wird, und mindestens ein weiterer Teil der Gesamtmenge der Komponente c) in einer weiteren, insbesondere zweiten Mischstufe durchgeführt wird.

8. Verfahren nach Anspruch 7, worin in der weiteren, insbesondere zweiten Mischstufe die gesamte restliche Menge

der Komponente c) zugegeben wird.

**9.** Verfahren nach einem oder mehreren der Ansprüche 1 bis 8, worin das Mischen in den genannten Mischstufen bei Temperaturen von mehr als 60° C bevorzugt mehr als 100 °C erfolgt.

**10.** Verfahren nach einem oder mehreren der Ansprüche 1 bis 9, worin die Mischungen zwischen den Mischstufen abgekühlt werden.

**11.** Verfahren nach einem oder mehreren der Ansprüche 1 bis 10, worin in einer ersten Mischstufe 30 bis 80 Gew.-%, bevorzugter 40 bis 70 Gew.-% der schwefelhaltigen siliciumorganischen Verbindung d) bezogen auf die Gesamtmenge der eingesetzten schwefelhaltigen siliciumorganlschen Verbindung zugesetzt werden.

**12.** Verfahren nach einem oder mehreren der Ansprüche 1 bis 10, welches umfasst:

(i) eine erste Mischstufe, worin
eine oder mehrere Kautschukkomponenten a),
ein oder mehrerer hydroxyl-haltige oxidische Füllstoffe b),
ein oder mehrere hydroxylgruppen-haltige Mikrogele c),
ein oder mehrere schwefelhaltige siliciumorganische Verbindungen d), gegebenenfalls ein oder mehrere Vulkanisationsmittel e), sowie gegebenenfalls ein oder mehrere Kautschukadditive f),
bei Temperaturen von mehr als 60 °C vermischt werden, wobei mindestens 30 Gew.-% Gesamtmenge der schwefelhaltigen siliciumorganische Verbindungen d) zugesetzt wird,
(ii) gegebenenfalls Abkühlen der in der ersten Mischstufe erhaltenen Mischung,
(iii) eine weitere, insbesondere zweite Mischstufe, worin mindestens ein weiterer Teil der Gesamtmenge der schwefelhaltigen siliciumorganische Verbindungen sowie gegebenenfalls eine oder mehrere der Komponenten a), b), c), e) und f) zugesetzt und bei Temperaturen von mehr als 60 °C vermischt werden,
(iv) Abkühlen der in Schritt (iii) erhaltenen Mischung,
(v) eine weitere, insbesondere dritte Mischstufen, in der als Kautschukadditiv f) ein oder mehrere Vulkanisationsbescheuniger, sowie gegebenenfalls ein oder mehrere Vulkanisationsmittel e) zugegeben und bei Temperaturen von bevorzugt weniger als 60° vermischt werden.

**13.** Verfahren nach Anspruch 12, worin ein Teil der Komponente c) in der Mischstufe (i) und der restliche Teil der Komponente c) in der Mischstufe (iii) zugegeben werden.

**14.** Verfahren zur Herstellung von Kautschukmischungen nach Anspruch 13, welches das Mischen folgender Komponenten umfasst:

a) eine oder mehrere Kautschukkomponenten,
b) ein oder mehrere hydroxylgruppen-haltiger oxidische Füllstoffe,
c) ein oder mehrere hydroxylgruppen-haltiger Mikrogele,
d) ein oder mehrere schwefelhaltige siliciumorganische Verbindungen,
e) gegebenenfalls ein oder mehrere Vulkanisationsmittel,
f) gegebenenfalls ein oder mehrere Kautschukadditive,

**dadurch gekennzeichnet, dass** mindestens zwei verschiedene schwefelhaltige siliciumorganische Verbindungen zugesetzt werden.

**15.** Kautschukmischungen, erhältlich nach einem oder mehreren der Ansprüche 1 bis 14.

**16.** Verfahren zur Herstellung von Vulkanisaten, welches das Vulkanisieren der Kautschukmischungen nach Anspruch 15 umfasst.

**17.** Vulkanisate, erhältlich durch Vulkanisieren der Kautschukmischungen nach Anspruch 15.

**18.** Vulkanisate nach Anspruch 17, in der Form von Reifen, Teilen von Reifen oder technischen Gummiartikeln.

## Claims

1. Process for the production of rubber mixtures which encompasses the mixing of the following components:

a) one or more rubber components,
b) one or more oxidic fillers containing hydroxy groups,
c) one or more microgels containing hydroxy groups,
d) one or more sulfur-containing organosilicon compounds,
e) if appropriate, one or more vulcanizing agents,
f) if appropriate, one or more rubber additives,

**characterized in that** the sulfur-containing organosilicon compound d) is added in at least two separate portions, where the first portion encompasses at least 30% by weight of the total amount of the sulfur-containing organosilicon compound d).

2. Process according to Claim 1, which encompasses at least two mixing stages.

3. Process according to Claim 1 or 2, in which the addition of the organosilicon compound d) takes place in at least two different mixing stages.

4. Process according to one or more of Claims 1 to 3, which encompasses:

(i) a first mixing stage, in which
one or more rubber components a),
one or more oxidic fillers b) containing hydroxy groups,
one or more microgels c) containing hydroxy groups,
one or more sulfur-containing organosilicon compounds d),
if appropriate, one or more vulcanizing agents e), and also if appropriate, one or more rubber additives f)
are mixed at temperatures of more than 60°C, where at least 30% by weight of the total amount of the sulfur-containing organosilicon compounds d) are added,
(ii) if appropriate, cooling of the mixture obtained in the first mixing stage,
(iii) a further, in particular second mixing stage, in which at least one further part of the total amount of the sulfur-containing organosilicon compounds, and also, if appropriate, one or more of components a), b), c), e), and f) are added and are mixed at temperatures of more than 60°C.

5. Process according to Claim 4, in which, in the further, in particular second mixing stage, the entire remaining amount of the sulfur-containing organosilicon compound d) is added.

6. Process according to one or more of Claims 1 to 5, in which component c) is added in at least two separate portions.

7. Process according to one or more of Claims 2 to 6, in which a part of the total amount of component c) is added in a first mixing stage, and at least one further part of the total amount of component c) is added in a further, in particular second mixing stage.

8. Process according to Claim 7, in which, in the further, in particular second mixing stage, the entire remaining amount of component c) is added.

9. Process according to one or more of Claims 1 to 8, in which the mixing in the mixing stages mentioned takes place at temperatures of more than 60°C, preferably more than 100°C.

10. Process according to one or more of Claims 1 to 9, in which the mixtures are cooled between the mixing stages.

11. Process according to one or more of Claims 1 to 10, in which, in a first mixing stage, from 30 to 80% by weight, more preferably from 40 to 70% by weight, of the sulfur-containing organosilicon compound d), based on the total amount of the sulfur-containing organosilicon compound used, are added.

12. Process according to one or more of Claims 1 to 10, which encompasses:

(i) a first mixing stage, in which
one or more rubber components a),
one or more oxidic fillers b) containing hydroxy groups,
one or more microgels c) containing hydroxy groups,
one or more sulfur-containing organosilicon compounds d),
if appropriate, one or more vulcanizing agents e), and also if appropriate, one or more rubber additives f)
are mixed at temperatures of more than 60°C, where at least 30% by weight of the total amount of the sulfur-containing organosilicon compounds d) are added,
(ii) if appropriate, cooling of the mixture obtained in the first mixing stage,
(iii) a further, in particular second mixing stage, in which at least one further part of the total amount of the sulfur-containing organosilicon compounds, and also, if appropriate, one or more of components a), b), c), e), and f) are added and are mixed at temperatures of more than 60°C,
(iv) cooling of the mixture obtained in step (iii),
(v) a further, in particular third mixing stage, in which, as rubber additive f), one or more vulcanization accelerators, and also, if appropriate, one or more vulcanizing agents e), are added, and are mixed at temperatures which are preferably less than 60°C.

**13.** Process according to Claim 12, in which a part of component c) is added in mixing stage (i) and the remaining part of component c) is added in mixing stage (iii).

**14.** Process for the production of rubber mixtures according to Claim 13, which encompasses the mixing of the following components:

a) one or more rubber components,
b) one or more oxidic fillers containing hydroxy groups,
c) one or more microgels containing hydroxy groups,
d) one or more sulfur-containing organosilicon compounds,
e) if appropriate, one or more vulcanizing agents,
f) if appropriate, one or more rubber additives,

**characterized in that** at least two different sulfur-containing organosilicon compounds are added.

**15.** Rubber mixtures, obtainable according to one or more of Claims 1 to 14.

**16.** Process for the production of vulcanizates, which encompasses the vulcanizing of the rubber mixtures according to Claim 15.

**17.** Vulcanizates, obtainable via vulcanization of the rubber mixtures according to Claim 15.

**18.** Vulcanizates according to Claim 17, in the form of tires, parts of tires, or industrial rubber items.

**Revendications**

**1.** Procédé pour la préparation de compositions de caoutchouc, qui comprend le mélange des composants suivants :

a) un ou plusieurs composants de caoutchouc,
b) une ou plusieurs charges de type oxyde contenant des groupes hydroxy,
c) un ou plusieurs microgels contenant des groupes hydroxy,
d) un ou plusieurs composés organosiliciés soufrés,
e) éventuellement un ou plusieurs agents de vulcanisation,
f) éventuellement un ou plusieurs additifs pour caoutchouc,

**caractérisé en ce que** le composé organosilicié soufré d) est ajouté en au moins deux portions séparées, la première portion comprenant au moins 30 % en poids de la quantité totale du composé organosilicié soufré d).

**2.** Procédé selon la revendication 1, qui comprend au moins deux étapes de mélange.

**3.** Procédé selon la revendication 1 ou 2, dans lequel l'addition du composé organosilicié d) s'effectue en au moins deux étapes de mélange distinctes.

**4.** Procédé selon une ou plusieurs des revendications 1 à 3, qui comprend :

(i) une première étape de mélange, dans laquelle on mélange
un ou plusieurs composants de caoutchouc a),
une ou plusieurs charges de type oxyde hydroxylées b),
un ou plusieurs microgels contenant des groupes hydroxy c),
un ou plusieurs composés organosiliciés soufrés d),
éventuellement un ou plusieurs agents de vulcanisation e), ainsi que
éventuellement un ou plusieurs additifs pour caoutchouc f),
à des températures de plus de 60°C, en ajoutant au moins 30 % en poids de la quantité totale des composés organosiliciés soufrés d),
(ii) éventuellement un refroidissement du mélange obtenu dans la première étape de mélange,
(iii) une autre, en particulier une deuxième étape de mélange, dans laquelle on ajoute une autre partie de la quantité totale des composés organosiliciés soufrés ainsi qu'éventuellement un ou plusieurs des composants a), b), c), e) et f) et on mélange à des températures de plus de 60 °C.

**5.** Procédé selon la revendication 4, dans lequel on ajoute dans l'autre, en particulier la deuxième, étape de mélange la totalité de la quantité restante du composé organosilicié soufré d).

**6.** Procédé selon une ou plusieurs des revendications 1 à 5, dans lequel le composant c) est ajouté en au moins deux portions séparées.

**7.** Procédé selon une ou plusieurs des revendications 2 à 6, dans lequel on ajoute dans une première étape de mélange une partie de la quantité totale du composant c) et on ajoute dans une autre, en particulier une deuxième, étape de mélange au moins une autre partie de la quantité totale du composant c).

**8.** Procédé selon la revendication 7, dans lequel on ajoute dans l'autre, en particulier la deuxième, étape de mélange la totalité de la quantité restante du composant c).

**9.** Procédé selon une ou plusieurs des revendications 1 à 8, dans lequel le mélange dans les étapes de mélange nommées s'effectue à des températures de plus de 60 °C, de préférence de plus de 100 °C.

**10.** Procédé selon une ou plusieurs des revendications 1 à 9, dans lequel on refroidit les mélanges entre les étapes de mélange.

**11.** Procédé selon une ou plusieurs des revendications 1 à 10, dans lequel on ajoute dans une première étape de mélange 30 à 80 % en poids, encore mieux 40 à 70 % en poids du composé organosilicié soufré d) par rapport à la quantité totale du composé organosilicié soufré qui est utilisé.

**12.** Procédé selon une ou plusieurs des revendications 1 à 10, qui, comprend :

(i) une première étape de mélange, dans laquelle on mélange
un ou plusieurs composants de caoutchouc a),
une ou plusieurs charges de type oxyde hydroxylées b),
un ou plusieurs microgels contenant des groupes hydroxy c),
un ou plusieurs composés organosiliciés soufrés d),
éventuellement un ou plusieurs agents de vulcanisation e), ainsi que
éventuellement un ou plusieurs additifs pour caoutchouc f),
à des températures de plus de 60 °C, en ajoutant au moins 30 % en poids de la quantité totale des composés organosiliciés soufrés d),
(ii) éventuellement un refroidissement du mélange obtenu dans la première étape de mélange,
(iii) une autre, en particulier une deuxième étape de mélange, dans laquelle on ajoute une autre partie de la quantité totale des composés organosiliciés soufrés ainsi qu'éventuellement un ou plusieurs des composants a), b), c), e) et f) et on mélange à des températures de plus de 60 °C,
(iv) le refroidissement du mélange obtenu dans l'étape (iii),

(v) une autre, en particulier une troisième, étape de mélange, dans laquelle on ajoute en tant qu'additif pour caoutchouc f) un ou plusieurs accélérateurs de vulcanisation, ainsi qu'éventuellement un ou plusieurs agents de vulcanisation e) et on mélange à des température de préférence inférieures à 60 °C.

**13.** Procédé selon la revendication 12, dans lequel on ajoute dans l'étape de mélange (i) une partie du composant c) et dans l'étape (iii) la partie restante du composant c).

**14.** Procédé pour la préparation de compositions de caoutchouc selon la revendication 13, qui comprend le mélange des composants suivants :

a) un ou plusieurs composants de caoutchouc,
b) une ou plusieurs charges de type oxyde contenant des groupes hydroxy,
c) un ou plusieurs microgels contenant des groupes hydroxy,
d) un ou plusieurs composés organosiliciés soufrés,
e) éventuellement un ou plusieurs agents de vulcanisation,
f) éventuellement un ou plusieurs additifs pour caoutchouc,

**caractérisé en ce qu'**on ajoute au moins deux composés organosiliciés soufrés différents.

**15.** Compositions de caoutchouc, pouvant être obtenues selon une ou plusieurs des revendications 1 à 14.

**16.** Procédé pour la production de vulcanisats, qui comprend la vulcanisation des compositions de caoutchouc selon la revendication 15.

**17.** Vulcanisats, pouvant être obtenus par vulcanisation des compositions de caoutchouc selon la revendication 15.

**18.** Vulcanisats selon la revendication 17, sous la forme de pneumatiques, de parties de pneumatiques ou d'articles industriels en caoutchouc vulcanisé.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2447614 A
- US 4709065 A
- EP 0501227 A
- EP 99074 A
- DE 3813678 A
- EP 447066 A
- EP 405216 A
- EP 0575851 A
- DE 19701489 A
- EP 1149866 A
- EP 1149867 A
- EP 1152030 A
- EP 1298166 A
- EP 1245630 A
- EP 1291369 A
- EP 0854171 A
- EP 1063259 A
- US 6399706 A
- EP 1401951 A
- US 2003092827 A
- FR 2295972
- FR 2053786
- JP 56104906 A
- EP 0405216 A
- DE 4220563 A
- GB 1078400 A
- DE 19701488 A
- DE 19834804 A
- DE 19834803 A
- DE 19834802 A
- DE 19939865 A
- DE 19942620 A
- DE 19942614 A
- DE 10021070 A
- DE 10038488 A
- DE 10039749 A
- DE 10052287 A
- DE 10056311 A
- DE 10061174 A
- EP 41664158 A
- EP 124563 U
- US 5302696 A
- US 5442009 A


### In der Beschreibung aufgeführte Nicht-Patentliteratur


- **I. Franta.** Elastomers and Rubber Compounding Materials. Elsevier, 1989, 73-7492-94
- **Houben-Weyl.** Methoden der Organischen Chemie. Thieme Verlag, 1987, vol. 20, 114-134
- Rubber 3. Synthetic. Ullmann's Encyclopedia of Industrial Chemistry. VCH Verlagsgesellschaft, 1993, vol. A 23, 239-364
- **K.-H. Nordsiek ; K.-H. Kiepert.** *GAK-Kautschuk Gummi Kunststoffe,* 1980, vol. 33 (4), 251-255
- Rubber 3. Synthetic. Ullmann's Encyclopedia of Industrial Chemistry. VCH Verlagsgesellschaft mbH, 1993, vol. A 23, 247-251
- **Houben-Weyl.** Methoden der Organischen Chemie. Thieme Verlag, 1987, vol. E 20, 114-134
- Rubber 3. Synthetic. Ullmann's Encyclopedia of Industrial Chemistry. VCH Verlagsgesellschaft mbH, 1993, vol. A 23, 239-364
- Silica. Ullmann's Encyclopedia of Industrial Chemistry. VCH Verlagsgesellschaft mbH, 1993, 635-645
- ULLMANN'S ENCYCLOPEDIA OF INDUSTRIAL CHEMISTRY. 635-642
- ULLMANN'S ENCYCLOPEDIA OF INDUSTRIAL CHEMISTRY. 642-645
- **Vollmert.** Polymer Chemistry. Springer, 1973
- **U. Eisele.** Einführung in die Polymerphysik. Springer-Verlag
- **J. Brandrup ; E. H. Immergut.** Polymer Handbook. Wiley & Sons, 1975
- **Houben-Weyl.** Methoden der organischen Chemie. vol. 14/2, 848
- Chemicals and Additives. Ullmann's Encyclopedia of Industrial Chemistry. VCH Verlagsgesellschaft mbH, 1993, vol. A 23, 366-417
- Carbon Black. Ullmann's Encyclopedia of Industrial Chemistry. VCH Verlagsgesellschaft mbH, 1993, vol. A 5, 95-158